# EUROPÄISCHE PATENTANMELDUNG

(11) **EP 2 228 579 A2**
(43) Veröffentlichungstag der Anmeldung: **15.09.2010**
(21) Anmeldenummer: 10155529.0
(22) Anmeldetag: 04.03.2010
(51) Int. Cl.: F16L 25/10

(54) **Rohr mit integraler Rohrmuffe**

(30) Priorität: 11.03.2009 DE 102009012699
(71) Anmelder: Wurzer Profiliertechnik GmbH, 86444 Affing (DE)
(72) Erfinder: Gans, Robert, 86444, Mühlhausen (DE)
(74) Vertreter: Graf Glück Habersack Kritzenberger

(57) **Zusammenfassung**

Die Erfindung betrifft ein zylindrisches Rohr aus einem zumindest teilweise verformbaren Material, wobei das Rohr an zumindest seinem Endabschnitt eine die Oberfläche des Rohrmantels vergrößernde Mantel-Längsprofilierung aufweist, die sich über die Mantelquerschnittsdicke des Rohres erstreckt und im Wesentlichen entlang der zylindrischen Längsachse verläuft.

## Beschreibung

Die Erfindung betrifft ein Zu- oder Ablaufrohr zylindrischer Form, das aus einem zumindest teilweise verformbaren Material, wie beispielsweise Kunststoff oder Metall besteht. Das Rohr kann auch aus einem Verbundmaterial bestehen.

Zum Verbinden zweier Rohrteile gleicher Machart sind Rohrmuffen oder Pressfittinge bekannt. Letztere weisen einen Fittingkörper auf, von dem eine Stützhülse absteht. Das Ende eines anzuschließenden Rohres wird auf die Stützhülse geschoben, woraufhin außen auf das aufgeschobene Rohrende eine Presshülse aufgepresst wird. Diese Presshülse ist zur Vereinfachung der Montage an dem Fittingkörper vormontiert und verläuft demzufolge im Wesentlichen konzentrisch zur Stützhülse. In Ähnlicher Weise ist es aus der DE 29 45 225 bekannt, bei einer koaxialen (Doppel-)Rohrleitung das Außenrohr mittels Metallbändern auf einem Innenrohr zu verklemmen. Damit das Außenrohr einen Halt in Axialrichtung auf dem Innenrohr bekommt, wird an letzterem eine Ringprofilierung um den Außenmantel des Innenrohrs vorgesehen. Alternativ zeigt die US 3,820,829 eine flexible Kupplung für ein Rohr. Diese Kupplung weist eine ringförmige Profilierung um den Außenumfang des Muffenmantels. Ähnlich der DE 29 45 225 ist die Profilierung in der US 3,820,829 vorgesehen, um eine axiale Dehnung zu ermöglichen.

Wird eine Rohrmuffe verwendet, so können die beiden Rohrelemente an ihrem Ende auch durch ein Verkleben oder Verschweißen mit der Rohrmuffe funktional verbunden werden. Ferner ist es bekannt, beim Zusammenführen zweier baugleicher Rohre, das eine Rohrende zu strecken, um dann das zweite Rohrstück in das gestreckte Rohrstück mit Kraft einschieben zu können. Hierzu ist es auch bekannt, mit rotierenden Werkzeugen das erste Rohrende an seinem Innendurchmesser zu vergrößern, so dass das zweite Rohrende in diesen Bereich mit vergrößertem Innendurchmesser eingepasst werden kann.

Gemäß der DE 85 25 294.8 U1 war es ferner bekannt, auf einem Grundrohr ein mit einer Längsprofilierung versehenes Halterungsrohr aufzuschweißen auf das dann zur Bildung eines Mehrschichtrohres ein abschließendes Außenrohr festgelegt wird. Wird das Grundrohr im Querschnitt verändert, so kann das Halterungsrohr diese Querschnittsveränderung mittragen und das Grundrohr stabilisieren, wobei sich eine Verschweißung der letztendlichen Rohrkonfiguration anschließen muss, um das Rohrsystem abdichtend abzuschließen.

Schließlich zeigt die DE 36 43 370 C3 ein längsgeteiltes Muffenrohr für Kabelstränge. Durch die Längsteilung kann das Rohr koaxial aufgespreizt und ein Kabelstrang eingebracht werden. Nachfolgend wird die offene Längsseite mit aufschiebbaren Verschlusselementen verschlossen, die jedoch keine Abdichtung garantieren können.

Aufgabe der Erfindung ist es, ein zylindrisches Rohr vorzusehen, mit dem eine Verbindung zu dimensionsgleichen Rohren einfacher realisierbar ist. Es ist ferner eine Aufgabe der Erfindung, ein zylindrisches Rohr bereitzustellen, bei dem das Risiko einer Beschädigung durch eine aufweitende Verformung minimiert ist. Es ist ferner eine Aufgabe der Erfindung, eine Verbindungs-Rohrmuffe zum Zusammenfügen zweier Rohre vorzusehen. Schließlich ist es eine Aufgabe der Erfindung, ein vereinfachtes Verfahren zum Zusammenfügen zweier Rohre zu schaffen.

Obige Aufgaben sind gelöst durch die Gegenstände der unabhängigen Ansprüche 1, 4 und 5. Vorteilhafte Ausführungsformen gehen aus den jeweiligen Unteransprüchen hervor.

Kerngedanke der Erfindung ist es, ein Rohr zumindest an seinem jeweiligen offenen Ende mit einer Profilierung zu versehen, die es ermöglicht, mittels Begradigung der Profilierung eine Rohrdurchmesservergrößerung zu realisieren. Dadurch entsteht an der gestreckten Stelle eine Muffe, in die ein anderes Rohr gesteckt werden kann. Bei der Profilierung handelt es sich dabei um eine Formgebung des Rohrmantels, dessen Oberfläche an dieser Stelle im Vergleich zum verbleibenden Rohrquerschnitt vergrößert wird, ohne dabei jedoch den Innendurchmesser des Rohres zu verändern. Mit anderen Worten kann es sich bei der Profilierung um eine in den Rohrmantel eingebrachte Wellenform - in Querschnittsansicht - handeln.

Das Rohr selbst kann aus verschiedenen Materialien gefertigt sein, insofern dieses Material eine zumindest leichte Verformung durch Aufweiten des Rohrdurchmessers zulässt. Diese Aufweitung kann mittels einem beliebigen Element erfolgen, das im Wesentlichen im Querschnitt die Kontur des zylindrischen Rohres hat, jedoch entlang der Längsachse dieses Elements einen konischen Zulauf aufweist. Zum Aufweiten des Rohrendes kann das aufzuweitende Rohrende an entsprechender Stelle auch erwärmt werden.

Gemäß einer vorteilhaften Ausführungsform ist vorgesehen, dass sich die Profilierung über die gesamte Länge des Rohres erstreckt. Diese Maßnahme kann eine Reduzierung der Herstellungskosten des Rohres ermöglichen.

Ein weiterer Vorteil dieser Profilierung liegt in einer Minimierung von Frostschäden bei Rohren, die z.B. im Bauwesen im Boden verlegt werden. Hier bietet die Längsprofilierung einen Dehnungsausgleich ähnlich einem Faltenbalg. Dieser verhindert das Platzen und damit die Zerstörung des Rohres.

Die Erfindung findet insbesondere Verwendung bei allen zylindrischen Rohren, die abgeschnitten und mit einer neuen Muffe zu versehen und nachfolgend zusammengesteckt werden müssen.

Die Bereitstellung eines kurzen Rohrstückes mit oben genannter Profilierung schafft erfindungsgemäß eine Rohrmuffe, in die beidseitig ein Rohrende zweier miteinander zu verbindender Rohre auf vorteilhafte Weise eingesteckt werden kann. Dies erfolgt gemäß obiger Darstellung gleichermaßen durch Aufweiten des jeweiligen profilierten Mantelbereichs des entsprechenden Rohrendes.

Es kann auch vorgesehen sein, die Profilierung über den gesamten Mantelquerschnitt vorzusehen. Dann ist der Innendurchmesser des Rohres maximal vergrößerbar. Im Übrigen hängt das Maß und die Fläche, an der die Profilierung vorgesehen ist, von der Art der miteinander zu verbindenden Rohre ab.

Schließlich betrifft die Erfindung auch ein Verfahren zum Zusammenfügen zweier Rohre von im Wesentlichen gleichen Durchmesser, wobei an zumindest einem der beiden Rohre am Verbindungsende eine die Oberfläche des Rohrmantels vergrößernde Mantel-Profilierung vorgesehen wird, die sich über die Mantelquerschnittsdicke des Rohres erstreckt und im Wesentlichen entlang der zylindrischen Längsachse des Rohres verläuft, wonach ein Aufweitelement in das profilierte Ende eingeschoben wird, um damit den Rohrdurchmesser zu vergrößern. Schließlich wird das Ende des zweiten Rohres in das aufgeweitete Rohrende des ersten Rohres eingesteckt. Die Verbindung zwischen den beiden Rohrenden kann mittels einer Verklebung, Verlötung, etc., oder Verschweißung verstärkt und/oder abgedichtet werden.

Die Erfindung wird nun mit Bezug auf die beigefügte Zeichnung näher erläutert.

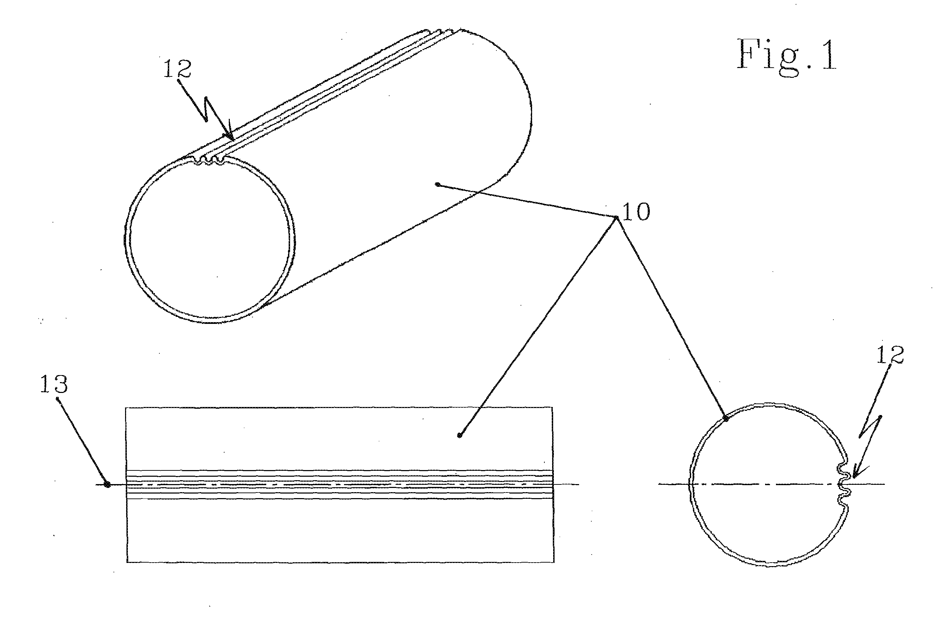

In dieser zeigt Figur 1 eine perspektivische Ansicht eines erfindungsgemäßen Rohrstückes 10, sowie eine Draufsicht und eine Querschnittsansicht. Aus den Darstellungen ist zu erkennen, dass das Rohr 10 über seine Längsachse 13 eine sich über die Mantelquerschnittsdicke erstreckende wellenförmige Profilierung 12 aufweist, mit der die Oberfläche des Rohrmantels an dieser Stelle vergrößert ist. Die Größe der Fläche, die die Profilierung 12 aufweist, kann variieren und ist auf die Art des jeweiligen Rohres anzupassen.

Zum Einschieben eines zweiten Rohres in das gezeigte Rohr 10 wird ein Aufweitelement (nicht gezeigt) in das offene Rohrende eingeschoben und die Profilierung dabei begradigt, womit sich der Innendurchmesser des Rohres 10 an seinem Ende selbst vergrößert. Nachfolgend kann das besagte zweite Rohr in das Ende eingeschoben werden, bis eine abdichtende Verbindung zwischen den beiden Rohrelementen geschaffen ist. Die Verbindung zwischen den beiden Rohrenden kann mittels einer Verklebung, Verlötung, etc., oder Verschweißung verstärkt und/oder abgedichtet werden.

## Patentansprüche

1. Zylindrisches Rohr (10) aus einem zumindest teilweise verformbaren Material,
**dadurch gekennzeichnet, dass** das Rohr an zumindest seinem Endabschnitt eine die Oberfläche des Rohrmantels vergrößernde Mantel-Profilierung (12) aufweist, die sich über die Mantelquerschnittsdicke des Rohres erstreckt und im Wesentlichen entlang der zylindrischen Längsachse (13) verläuft.

2. Zylindrisches Rohr (10) nach Anspruch 1,
**dadurch gekennzeichnet, dass** die Mantelprofilierung eine Längsprofilierung ist.

3. Zylindrisches Rohr (10) nach Anspruch 1,
**dadurch gekennzeichnet, dass** sich die Profilierung (12) über die gesamte Länge des Rohres (10) erstreckt.

4. Zylindrisches Rohr (10) nach Anspruch 1 bis 3,
**dadurch gekennzeichnet, dass** die Profilierung (12) eine im Rohr-Querschnitt wellenförmige Verformung des Rohrmantels darstellt.

5. Verwendung eines Rohres (10) gemäß einem der Ansprüche 1 bis 4 als Rohrmuffe zum Zusammenfügen zweier Rohre.

6. Verfahren zum funktionalen Zusammenfügen zweier Rohre von im Wesentlichen gleichen Durchmesser, aufweisend folgende Verfahrensschritte:
a) an zumindest einem der beiden Rohre (10) wird am Verbindungsende eine die Oberfläche des Rohrmantels vergrößernde Mantelprofilierung (12) vorgesehen, die sich über die Mantelquerschnittsdicke des Rohres erstreckt und im Wesentlichen entlang der zylindrischen Längsachse (13) des Rohres verläuft,
b) Einschieben eines Aufweitelements in das profilierte Ende und Vergrößern des Rohrdurchmesser des profilierten Endes,
c) Einstecken des zweiten Rohres (10) in das aufgeweitete Rohrende des ersten Rohres.

7. Verfahren nach Anspruch 6,
**dadurch gekennzeichnet, dass** zum Vergrößern des Rohrdurchmessers unter Schritt b) Wärme an die Stelle der Profilierung (12) zugeführt wird.

8. Verfahren nach Anspruch 6,
**dadurch gekennzeichnet, dass** die Mantelprofilierung eine Längsprofilierung ist.
